(19) Europäisches Patentamt
European Patent Office
Office européen des brevets

(11) EP 1 564 997 A1

(12) # EUROPEAN PATENT APPLICATION

(43) Date of publication:
17.08.2005 Bulletin 2005/33

(51) Int Cl.7: **H04N 7/26**, H04N 7/30

(21) Application number: 04003194.0

(22) Date of filing: 12.02.2004

(84) Designated Contracting States:
AT BE BG CH CY CZ DE DK EE ES FI FR GB GR HU IE IT LI LU MC NL PT RO SE SI SK TR
Designated Extension States:
AL LT LV MK

(71) Applicant: MATSUSHITA ELECTRIC INDUSTRIAL CO., LTD.
Kadoma-shi, Osaka 571-8501 (JP)

(72) Inventors:
- Wedi, Thomas
64832 Gross-Umstadt (DE)
- Wittmann, Steffen
63263 Neu-Isenburg (DE)

(74) Representative: Grünecker, Kinkeldey, Stockmair & Schwanhäusser Anwaltssozietät
Maximilianstrasse 58
80538 München (DE)

(54) **Encoding and decoding of video images based on a quantization with an adaptive dead-zone size**

(57) The present invention enables to control the encoding of film grain information without adversely affecting the overall coding efficiency of the encoding process of video data. For this purpose, a control of the size of the quantization interval for the lowest transform coefficient values is separated from a control of fitting the quantization interval and the quantized value to a probability distribution of the transform coefficient values. This is accomplished by providing a dead-zone parameter to be taken into account by the quantization process and the dequantization process.

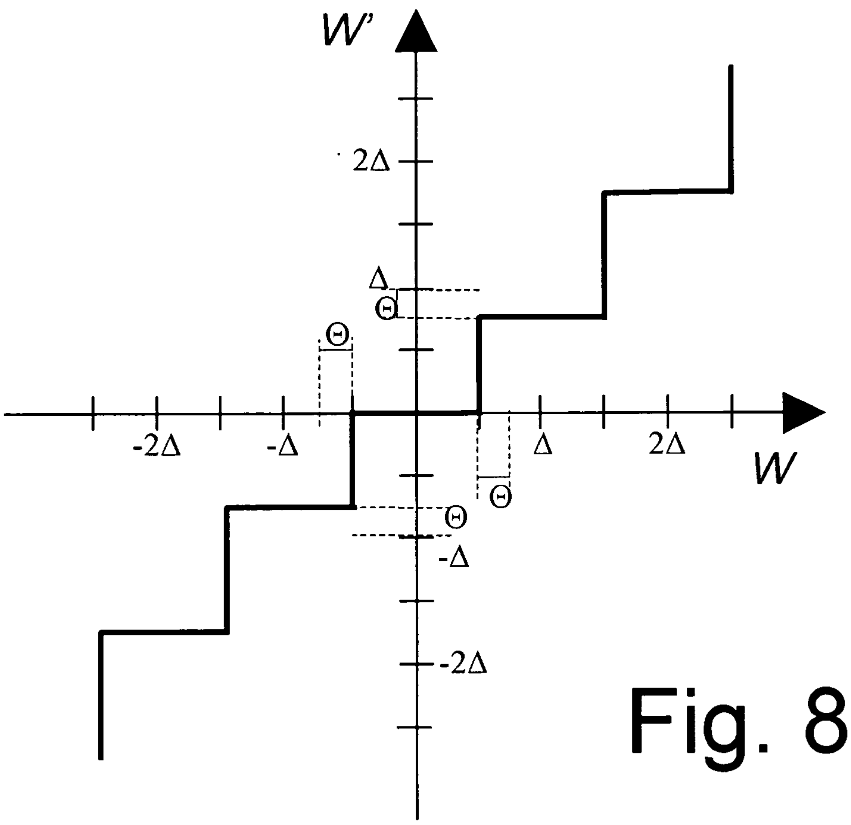


Fig. 8a

EP 1 564 997 A1

## Description

The present invention relates to the encoding and decoding of motion picture video data. Particularly, the present invention relates to a method and an apparatus for encoding and decoding video data, including film grain information, by employing an adapted quantization.

A motion picture film consists of silver-halide crystals, which are dispersed within a photographic emulsion of the film. Each image recorded on the photographic film is generated by exposing and developing the silver-halide crystals. In color images, the silver is chemically removed after the development. However, the silver crystal structure remains after development in the form of tiny grains of dye. Due to the random form of silver crystals in the emulsion, the grains are randomly formed and distributed within the image. An illustrative example of a grain structure is shown in Fig. 1. A perceivable grain structure is called film grain.

A viewer watching a motion picture reproduction does not recognize the individual grains which have a size of about 0.002 mm down to above one-tenth of that size. However, the viewer will perceive groups of grains and identify same as film grain.

For enhancing the resolution of the images, the perception of film grain is likewise increased. Specifically, film grain is clearly noticeable in cinema reproductions and in high-definition video images. On the other hand, film grain is of less importance for standard television images and for even smaller television display formats.

Motion pictures are being adopted in increasing numbers of applications, ranging from video-telephoning and video-conferencing to DVD and digital television. When a motion picture is being transmitted or recorded, a substantial amount of data has to be sent through conventional transmission channels of limited available frequency bandwidth or has to be stored on conventional storage media of limited data capacity. In order to transmit and store digital data on conventional channels/ media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standards are currently the standards denoted as H.264 / AVC or MPEG-4 / AVC.

The encoding approach underlying most of these standards consists of the following main stages:

(a) Dividing each individual frame into blocks of pixels in order to subject each video frame to data compression at a block level.

(b) Reducing spatial redundancies within a video frame by applying each block of video data to a transform from the spatial domain into the frequency domain.

(c) Quantizing the resulting transform coefficients.

(d) Entropy encoding the quantized transform coefficients.

(e) Exploiting temporal dependencies between blocks of subsequent frames in order to only transmit changes between subsequent frames. This is accomplished by employing a motion estimation/ compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

Although current video coding standards employ a plurality of different procedural steps to cope with different video contents, these standards do not take film grain into account. Consequently, these standards do not encode film grain information. Film grain information can only be maintained when reducing the coding efficiency considerably.

Accordingly, the present invention aims to provide an improved method and apparatus for encoding and decoding video data, including film grain information, by maintaining a high encoding efficiency.

This is achieved by the subject matter of the independent claims.

Preferred embodiments are the subject matter of dependent claims.

According to a first aspect of the present invention, a method for encoding video data is provided. The method comprises the steps of dividing an image into blocks, wherein each block includes a plurality of pixels, transforming

the pixels of a block into transform coefficients and quantizing the transform coefficients in accordance with pre-defined quantization intervals by mapping each coefficient value to a quantized coefficient value. The size of the quantization interval of the lowest coefficient values is adjusted in accordance with a variable dead-zone parameter. The applied dead-zone parameter is included into the encoded video data for a corresponding modification of the quantization interval of the lowest coefficient values at the decoder side.

According to a further aspect of the present invention, an encoding apparatus for encoding video data based on image blocks is provided. Each image block includes a plurality of pixels. The encoder comprises a transform unit and a quantizer. The transform unit transforms the pixels of a block into transform coefficients. The quantizer quantizes the transform coefficients in accordance with pre-defined quantization intervals by mapping each coefficient value to a quantized coefficient value. The size of the quantization interval of the lowest coefficient values is adjusted in accordance with a variable dead-zone parameter. The applied dead-zone parameter is included into the encoded video data for a corresponding modification of the quantization interval of the lowest coefficient values at the decoder side.

According to another aspect of the present invention, a method for decoding video data on a block basis is provided. The encoded video data include quantized coefficients. The method comprises the steps of de-quantizing quantized coefficients of said encoded video data by mapping each quantized coefficient value to a de-quantized coefficient value in accordance with pre-defined quantization intervals, and transforming a block of de-quantized coefficients into a block of pixels. The size of the quantization interval of the lowest coefficient values is adjusted in accordance with a variable dead-zone parameter.

According to still another aspect of the present invention, a decoding apparatus for decoding encoded video data on a block basis is provided. The encoded video data include quantized coefficients. The decoder comprises an inverse quantizer and an inverse transform unit. The inverse quantizer de-quantizes a block of quantized coefficients of said encoded video data by mapping each quantized coefficient value to a de-quantized coefficient value in accordance with pre-defined quantization intervals. The inverse transform unit transforms a block of de-quantized coefficients into a block of pixels. The size of the quantization interval of the lowest coefficient values is adjusted in accordance with a variable dead-zone parameter.

It is the particular approach of the present invention, that the interval size of the quantization interval for the lowest coefficient values which are quantized to zero may be set adaptively in accordance with a variable dead-zone parameter. The dead-zone parameter is transmitted to the decoder side such that the interval is accordingly changed during the de-quantization procedure. Thus, the relative position of the coefficient values with respect to the quantization interval (and the quantization value) and, consequently, the coding efficiency are maintained.

According to conventional approaches, a rounding control parameter may be employed to influence the size of the quantization interval of the lowest coefficient values. However, the adjustment of the interval size by the rounding control parameter adversely effects the position of the coefficient values with respect to the range of the quantization interval. The coding efficiency is affected accordingly. In contrast, the present invention enables to maintain the coding efficiency by adjusting the interval size for the lowest coefficient values. For this purpose, the decoding process is adjusted accordingly. For this purpose, the variable adjusting parameter is provided to the decoder such that the quantization interval at the decoder side can be adjusted in an inverse manner.

By adjusting the size of the quantization interval for the lowest coefficient values, the degree of encoding film grain information can be set adaptively. Reducing the size of the quantization interval for the lowest coefficient values, preserves the film grain information within the encoded video data. In contrast, an enlargement of the interval reduces the film grain information in the encoded video data. As the interval adjustment for the lowest coefficient values introduced by the present invention does not affect the adaptation of the quantization to the probability distribution of the transform coefficient values, the coding efficiency is not adversely effected.

Preferably, the quantization intervals are further adjusted in accordance with a rounding control parameter. In contrast to the dead-zone parameter, the rounding control parameter is not part of the encoded video data.

Accordingly, the range of the quantization intervals can be adjusted in two different manners. Firstly, the range of the quantization intervals may be adjusted in order to be optimally fitted to the probability distribution of the coefficient values for each interval by setting the rounding control parameter. Secondly, the quantization interval for the lowest coefficient values may be adjusted by maintaining the adjustment of the rounding control parameter, i.e. preserving the achieved fit to the probability distribution. In this manner, film grain information can be encoded without adversely effecting the coding efficiency.

The dead-zone parameter preferably has a value between a fifth and a half of the interval step size. Most preferably the dead-zone parameter has a size of a quarter of the interval size.

Preferably, the dead-zone parameter included in the encoded video data is updated every field or frame of the encoded video sequence. In this manner a variable degree of film grain information within the video data can immediately be taken into account to efficiently control the quantization interval size for the lowest coefficient values.

According to another preferred embodiment, the dead-zone parameter is updated in larger intervals, for instance, for each new video sequence to be encoded.

According to another preferred embodiment, different dead-zone parameters are selected depending on the used video coding mode. In particular, the applicable dead-zone parameter is selected for each macro block depending on the type of macro block, i.e. an I type, a P type or a B type macro block.

According to a further preferred embodiment, the dead-zone parameter is selected in accordance with a detected degree or the presence of film grain within the data to be encoded. Such an adaptive approach allows to always select the appropriate dead-zone parameter depending on the currently encoded image content. Alternatively, the detection process may only evaluate the presence of film grain in the video data to be encoded.

The above and other objects and features of the present invention will become more apparent from the following description and preferred embodiments given in conjunction with the accompanying drawings, in which:

Fig. 1 illustrates an enlarged example of a film grain structure;

Fig. 2 schematically illustrates in block diagram form the configuration of a conventional hybrid video encoder;

Fig. 3 schematically illustrates in block diagram form the configuration of a conventional hybrid video decoder;

Fig. 4 illustrates an example for a relation between an input coefficient value W and a quantized output coefficient value W' for a uniform quantizer having a step size of $\Delta$ and a rounding control value of $f = \Delta/2$;

Fig. 5 illustrates an example for a relation between an input coefficient value W and a quantized output coefficient value W' for a quantizer having a step size of $\Delta$ and a rounding control value $f = 0$;

Fig. 6 schematically illustrates a Laplacian probability distribution;

Fig. 7 illustrates an example of a relation between an input coefficient value W and a quantized output coefficient value W' wherein the size of the quantization interval for the lowest coefficient values is enlarged by applying a dead-zone parameter $\Theta$ in accordance with the present invention;

Fig. 8a illustrates an example of a relation between an input coefficient value W and a quantized output coefficient value W' wherein the size of the quantization interval for the lowest coefficient values is reduced by applying a dead-zone parameter $\Theta$ in accordance with the present invention;

Fig. 8b illustrates an example for a relation between an input coefficient value W and a quantized output coefficient value W' for a uniform quantizer having a step size of $\Delta$ and a rounding control value of $f = \Delta/4$ corresponding to the rounding control parameter of Fig. 8a;

Fig. 9 schematically illustrates in block diagram form a preferred modification of a hybrid video encoder in accordance with the present invention;

Fig. 10 schematically illustrates in block diagram form an example of a modified hybrid video decoder in accordance with the present invention;

Fig. 11 a illustrates an example of transform coefficient blocks before quantization;

Fig. 11 b illustrates an example of transform coefficient blocks after quantization;

Fig. 11 c illustrates an example of transform coefficient blocks before quantization corresponding to the example of Fig. 11 a;

Fig. 11 d illustrates an example of transform coefficient blocks after quantization in accordance with the present invention;

Fig. 12 is a flow chart illustrating the process of encoding video data in accordance with the present invention; and

Fig. 13 is a flow chart illustrating the process of decoding encoded video data in accordance with the present invention.

Referring to Fig. 2, an example of a hybrid video encoder is illustrated. The video encoder, generally denoted

by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 2 is as follows. The encoder employs a Differential Pulse Code Modulation (DPCM) approach which only transmits differences between the subsequent images of an input video sequence. These differences are determined in subtractor 110 which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the prediction signal.

The motion compensated DPCM, conducted by the video encoder of Fig. 2, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, an displacement vector for each block of a current frame is estimated.

This is accomplished by a motion estimator unit 170, receiving the current input signal and the locally decoded images.

Based on the results of motion estimation, motion compensation performed by motion compensation prediction unit 160 provides a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed therefore.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264 / AVC additionally employs a prediction scheme based on already encoded macro blocks of the same image in order to predict subsequent macro blocks.

Only Intra-encoded images (I-type images) can be encoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensation prediction unit 160, is controlled by Intra/Inter switch 180.

Further, a de-blocking filter 137 may be provided in order to reduce the presence of blocking effects in the locally decoded image.

For reconstructing the encoded images at the decoder side, the encoding process is applied in reverse manner. A schematic block diagram, illustrating the configuration of the corresponding decoder, is shown in Fig. 3. First, the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from a Intra-frame prediction unit 260 in Intra-mode. The resulting image may be applied to a de-blocking filter 240 and the decoded signal is stored in memory 250 to be applied to prediction units 260, 270.

Referring to Fig. 4, an example of a relation between an input coefficient value W and a quantized output coefficient value W' for a uniform quantizer is shown. While the input coefficient value W represents that coefficient value submitted to the quantization unit 120 as shown in Fig. 2, W' represents the de-quantized coefficient value output from inverse quantization unit 130, 220 of Fig. 2 and Fig. 3. According to the example shown in Fig. 4, all input coefficient values in the range of $-\Delta/2 < W \leq \Delta/2$ are quantized to an output coefficient value of $W' = 0$. In the same manner, the input coefficient values between $\Delta/2 < W \leq 3\Delta/2$ are quantized to $W' = \Delta$. This uniform quantization, i.e. a quantization applying uniform quantization intervals, can be expressed by the following equation (1):

$$Z = \text{floor}\left(\frac{|W| + f}{\Delta}\right) \bullet \text{sgn}(W) \qquad (1)$$

In accordance with equation (1), an input coefficient value W is mapped to a quantization level Z. Δ represents the quantization step-size or interval size and f represents a rounding control parameter. The rounding control parameter f enables to adjust the threshold between two quantization values on the W axis. This will be describe in detail below in connection with Fig. 5.

The rounding control parameter f is set in the quantization curve shown in Fig. 4, to $f = \Delta/2$. The function "floor (... )" rounds to the nearest integer towards zero while the function "sgn (... )" returns the sign of the input coefficient value W.

The mapping of the quantization level Z to a quantized coefficient value W' is expressed by equation (2):

$$W' = \Delta \cdot Z \qquad (2)$$

The operation of equation (2) is called "inverse quantization" or "de-quantization".

Another example of a quantization curve is shown in Fig. 5. By modifying the rounding control parameter f, the rounding behaviour of the quantization operation can be controlled. By employing a rounding control parameters of $f = \Delta/2$ for the example shown in Fig. 4, the quantized coefficient values W' are respectively located within the centre of a quantization interval of the coefficient input values W. For instance, all input coefficient values between $\Delta/2 < W \leq 3\Delta/2$ are quantized to output coefficient values of $W' = \Delta$.

When employing smaller values for the rounding control parameter f, the quantized coefficient values W' tend to be smaller than the centre value of the interval of input coefficient values W. An the example for a control rounding parameter of f = 0 is shown in Fig. 5. As can be seen therefrom, each quantization interval of input coefficient values W is mapped to the lower interval value as output coefficient value W'.

The introduction of the rounding control parameter f = 0 has the following two effects:

1. The quantization interval around the coefficient value of 0 is increased. Thus, all values of input coefficient values W between $-\Delta < W < \Delta$ are quantized to the output coefficient value of W' = 0.

2. The values of the quantized coefficient values $W' \neq 0$ are not located in the centre of the quantization interval. For instance, the range of input coefficient values $\Delta < W \leq 2\Delta$ is quantized to $W' = \Delta$.

The video coding standards as H.264 / AVC employ a rounding control parameter f having a value of $f = \Delta/3$ in Intra mode and $f = \Delta/6$ in inter mode. These shifts of the quantization range compared to the quantization intervals shown in Fig. 4 aim to better fit to a non-uniform probability distribution of the input coefficient values. The non-uniform probability distribution of transform coefficients in video coding can be approximated by a Laplacian probability distribution. An example of a Laplacian probability distribution is shown in Fig. 6. Due to the probability distribution of transform coefficients, there tend to be more smaller quantization values within each quantization interval. For this reason, rounding control parameters of $f < \Delta/2$ are employed resulting in smaller values of the quantized coefficient values W'. The quantized coefficient values are thus not located in the centre of a quantization interval.

As the parameters of a Laplacian distribution vary for the Intra and Inter encoding modes, different rounding control parameters are used for each coding mode.

Regarding the encoding of film grain present in motion pictures, film grain is a temporary uncorrelated structure which is not predictable by motion compensation. Consequently, the film grain needs to be encoded in the prediction error, i.e. individually for each coding block. An example of a block of coefficient of a prediction error is illustrated in Fig. 11a.

The film grain information is especially represented by the small prediction error values which, in turn, are reflected by small transform coefficient values. As the quantization stage during video encoding is designed that all coefficient values around zero are quantized to zero, the film grain information is irreversibly lost. As long as smaller display sizes are employed which are not able to reproduce the film grain information, this quantization loss is intended. An example of quantized blocks of transform coefficients is shown in Fig. 11 b. As can be seen therefrom, the quantization interval for the lowest coefficient values effects that all small coefficient values are quantized to zero.

The film grain information can be preserved within the encoded video data by reducing the size of the quantization intervals such that more quantization intervals are provided. However, such a modification results in significant

bit rate increase of the encoding result and a correspondingly reduced encoding efficiency.

According to another approach, the rounding control parameter f may be modified as shown, for instance in Fig. 4 and Fig. 5. However, a modification of the rounding control parameter only effects the size of the quantization interval for the lowest coefficient values, while the thresholds for quantizing coefficient values W to adjacent quantization values is shifted uniformly for all threshold values. This shift of each quantization interval reduces the adaptation of the quantization to the Laplacian distribution. Consequently, the quantization error is increased and the encoding efficiency is reduced.

The present invention proposes a variable dead-zone parameter allowing to control the size of the quantization interval for the lowest coefficient values without adversely affecting the mapping of coefficient values, which is adapted to the Laplacian probability distribution, in other quantization intervals. As the parameter size can be variably set, a trade off between the remaining film grain and the overall distortion can be controlled.

A modification of the quantizer's dead-zone size is directly connected to the intensity of the remaining film grain. When the dead-zone size is reduced, more film grain is visible. If, on the other hand, the size of the dead-zone is increased, less film grain is preserved within the encoded video data. While current video encoding standards do not employ a dead-zone parameter in accordance with the present invention, an optimized size of the dead-zone by employing the dead-zone parameter of the present invention can increase the picture quality of high definition motion pictures including film grain significantly.

The need to preserve film grain within the encoded video data depends on the particular application. If there is no need to reconstruct the film grain at the decoder side, a larger dead-zone can be accepted. By employing a larger dead-zone, the number of small and insignificant transform coefficients which are lost due to the quantization process is increased. If however, the film grain needs to be reconstructed at the decoder side, the film grain reproduction from the encoded video data can be improved by employing a dead-zone of a small size. Thus, by employing a variable dead-zone parameter, the dead-zone size can adaptively be set at the encoder and decoder sites simultaneously.

When including a variable dead-zone parameter into the quantization process, equation (1) is adapted accordingly and can be expressed by equation (3) as follows:

$$Z = \mathrm{floor}\left(\frac{|W| - \Theta + f}{\Delta}\right) \cdot \mathrm{sgn}(W) \qquad (3)$$

The inverse quantization is given by equation (4):

$$W' = (\Delta \cdot |Z| + \Theta) \cdot \mathrm{sgn}(Z) \qquad (4)$$

As can be seen from equation (4), the absolute value indicating the quantization level is multiplied by the step-size $\Delta$. To the value resulting from the multiplication, the dead-zone parameter $\Theta$ is added. By adding the dead-zone parameter $\Theta$ during the inverse quantization process defined in equation (4), a reduction of the dead-zone size by dead-zone parameter $\Theta$ at the encoder side as defined by equation (3) is compensated. While the dead-zone parameter $\Theta$ proposed by the present invention effects a correction of the interval size for the lowest coefficient values at the encoder and decoder side, the rounding control parameter f is only applied during the encoding process and no compensation at the decoding side is required.

Referring to Fig.7 and Fig. 8a, examples for applying the dead-zone parameter during the quantization process are illustrated. While the example of Fig. 7 illustrates a dead-zone parameter $\Theta$ enlarging a dead-zone, the dead-zone of Fig. 8a is reduced by the application of the dead-zone parameter of the present invention.

Fig. 7 illustrates a relation between the input coefficient value W and the dequantized output coefficient value W'. Starting from a relation as shown in Fig. 4, the dead-zone, i.e. the size of the quantization interval for the lowest coefficient values, is enlarged by adding the dead-zone parameter $\Theta$. While the influence of the rounding control parameter f remains unnoticed at the decoder side, an enlargement corresponding to that at the encoder side is effected by the dead-zone parameter also at the decoder side. By enlarging the dead-zone, less small coefficient values are preserved within the encoded data.

In contrast, Fig. 8a illustrates a relation between a coefficient value W and the dequantized output coefficient value W' wherein the dead-zone size has been reduced by the application of the dead-zone parameter $\Theta$. In contrast to Fig. 7, the rounding control parameter of Fig. 8 has been set to $f = \Delta/4$.

By employing a dead-zone parameter $\Theta$ smaller than zero, the quantization interval around zero is reduced and less small values are quantized to zero. Although the dead-zone size is reduced, the de-quantized output coefficient

values W' are still located at the same relative position within each quantization interval. For instance, the range of $1/2\Delta < W \leq 3/2\Delta$ is quantized to the output coefficient value of $W' = 3/4\Delta$.

By controlling the dead-zone parameter Θ the reconstruction of small coefficient values for preserving the film grain information within the encoded video data can be controlled.

Fig. 8b illustrates a prior art example which is based on the example shown in Fig. 5, however the rounding control parameter f corresponds to that applied in Fig. 8a namely, $f = \Delta/4$. When comparing the quantizers of Fig. 8a Fig. 8b:

1. the coefficient values within each interval are located at the same relative position in relation to the quantized value. Thus the mapping of both quantizers is adapted to the Laplacian probability distribution;

2. the size of the quantization interval for the lowest coefficient values differs. While the conventional quantizer (Fig. 8b) applies a quantization interval for the lowest coefficient values ranging to $3/4\Delta$, this interval is adapted according to the present invention (Fig. 8a) by applying the dead-zone parameter Θ to $\Delta/2$.

Consequently, the size of the quantization interval for the lowest coefficient values can be changed by applying the dead-zone parameter Θ without adversely affecting the adaptation of the mapping to the Laplacian probability distribution. This mapping can still be fit to the probability distribution of the coefficients by varying the size of the rounding control parameter f.

In contrast to the rounding control parameters f, the dead-zone parameter Θ has to be applied during the encoding process and, in addition, during the decoding process. Hence, the dead-zone parameter has to be transmitted from the encoder to the decoder side. The frequency of transmitting the dead-zone parameter to be applied at the decoder may be set, for instance, to once per frame or once per sequence, etc.

A schematic block diagram illustrating the configuration of an encoder and decoder in accordance with the present invention is shown in Fig. 9 and Fig. 10. The block diagrams of Fig. 9 and Fig. 10 denote block elements identical to those of Fig. 2 and Fig. 3 by identical reference numerals.

In addition to those block elements already shown in Fig. 2, the encoder illustrated in Fig. 9 generally denoted by reference numeral 300 further comprises a processing unit 310 for applying a dead-zone parameter to the quantizer 120 and forwarding the applied dead-zone parameter to the entropy encoder 190 for transmission to the decoder side. Alternatively, the dead-zone parameter is not subjected to entropy encoding before transmission to the decoder side.

Fig. 10 illustrates the configuration of a decoding device corresponding to the encoder of Fig. 9. The decoder is generally denoted with reference numeral 400. In addition to the block elements of Fig. 3, a processing unit 410 is inserted. Processing unit 410 applies the received dead-zone parameter to the inverse quantizer 220.

The processing units 310 and 410 may memorize the dead-zone parameter for application during the application period of the applicable dead-zone parameter. In particular, the processing units may memorize different dead-zone parameters to be applied for different encoding modes, for instance for I type, P type and B type images or macroblocks.

While Fig. 11 c illustrates four blocks of quantized transform coefficient values corresponding to the blocks shown in Fig. 11 a, Fig. 11 d illustrates four blocks of quantized transform coefficients when applying a dead-zone parameter in accordance with the present invention.

The operation of the encoder and decoder of Fig. 9 and Fig. 10 is described next in connection with Fig. 12 and Fig. 13.

Fig. 12 is flow chart illustrating the operation of an encoder in accordance with the present invention. After dividing a video image to be encoded into a plurality of blocks (step S10), the pixels of a block are transformed into a block of transform coefficients (step S20). Preferably, an orthogonal transform like a DCT is applied. The interval size for the lowest coefficient values around zero is set in accordance with the dead-zone parameter introduced by the present invention (step S30). The transform coefficients are quantized in accordance with the adjusted size of the quantization intervals (step S40).

The dead-zone parameter may be a fixed parameter or an updateable parameter. When employing an updateable parameter, the parameter is included into the encoded video data in order to enable a decoder to apply the corresponding operation.

The encoded video data include quantized transform coefficients and one or several dead-zone parameters. These data may be stored in a memory device or transmitted to a decoder for immediate reconstruction of the compressed image.

The decoding process is next described in connection with Fig. 13. The interval size for the lowest coefficient values around zero is set in accordance with the dead-zone parameter received from the encoder side (step S50). The received coefficients are subjected to dequantization in accordance with adjusted quantization intervals (step S60). The de-quantized coefficient values are transformed into a block of pixels (step S70) and subsequent blocks are combined to form decoded video image (step S80).

The quantization of transform coefficients applied by the current video decoding standard H.264 / AVC can be expressed by equation (5)

$$Z_{ij} = ((|W_{ij}| \cdot MF + f) >> qbits) \cdot \mathrm{sgn}(W_{ij}) \qquad (5)$$

The term $W_{ij} \cdot MF$ represents the transformed coefficients to be quantized. In order to achieve a hardware-friendly implementation of the quantization process, scaling factor MF is separated from the transform operation and included into the quantization process. Indices ij denote the position of a transformed coefficient within the transform matrix. Rounding control parameter f serves to fit the quantization operation to the Laplacian probability distribution of the transform coefficients. As the probability distribution may differ for Intra encoding mode and Inter encoding mode, different values for the control parameters f may be used for each mode. The » operation denotes a right shift. This right shift operation is used to avoid any division operation and enables a simple hardware implementation thereof. The right shift operation is equivalent to a division by $2^{qbits}$ the term abbreviated by "qbits" is expressed by equation (6):

$$qbits = 15 + floor\left(\frac{QP}{6}\right) \qquad (6)$$

QP denotes the quantization parameter. The function "sgn(...)" of equation (5) returns the sign of the input coefficient value. Employing equation (7)

$$\Delta = 2^{qbits} \qquad (7)$$

equation (5) can be modified to equation (8):

$$Z_{ij} = floor\left(\frac{|W_{ij}| \cdot MF + f}{\Delta}\right) \cdot \mathrm{sgn}(W_{ij}) \qquad (8)$$

By introducing the dead-zone parameter Θ equation (8) is further modified to equation (9):

$$Z_{ij} = floor\left(\frac{|W_{ij} \cdot MF| - \Theta + f}{\Delta}\right) \cdot \mathrm{sgn}(W_{ij}) \qquad (9)$$

By taking equation (7) into account, equation (9) is further modified to equation (10):

$$Z_{ij} = ((|W_{ij} \cdot MF| - \Theta + f) >> qbits) \cdot \mathrm{sgn}) W_{ij}) \qquad (10)$$

The inverse quantization as defined by the current encoding of standard H.264 / AVC is expressed by equation (11):

$$W_{ij} = Z_{ij} \cdot V_{ij} \cdot 2^{floor(\frac{QP}{6})} \qquad (11)$$

The factor

$$V_{ij}\cdot 2^{floor\left(\frac{QP}{6}\right)}$$

includes the quantization step size $\Delta$ from equation (7) and the scaling factor. The scaling factor originates from the inverse transform and is not part of the core quantization scheme. For introducing the dead-zone parameter $\Theta$ in the inverse transform of equation (11) the scaling factor has to be separated from the quantization step size $\Delta$. In accordance with equation (6) the separation can be expressed as shown by equation (12):

$$V_{ij}\cdot 2^{floor\left(\frac{QP}{6}\right)} = V_{ij}\cdot 2^{qbits}\cdot 2^{-15} = \Delta\cdot V_{ij}\cdot 2^{-15} \qquad (12)$$

By taking equation (12) into account, the inverse quantization expressed by equation (11) can be modified to equation (13):

$$W'_{ij} = (Z_{ij}\cdot\Delta)\cdot V_{ij}\cdot 2^{-15} \qquad (13)$$

In equation (13)

$$V_{ij}\cdot 2^{-15}$$

denotes a scaling factor that orginates from the inverse transform. The dead-zone size can be integrated into the inverse transform and equation (13) can be modified to equation (14):

$$W'_{ij} = (|Z_{ij}|\cdot\Delta+\Theta)\cdot V_{ij}\cdot 2^{-15}\cdot \mathrm{sgn}(Z_{ij}) \qquad (14)$$

When employing a shift operation instead of a multiplication operation of $2^{-15}$, equation (14) can be rewritten as equation (15):

$$W'_{ij} = (|Z_{ij}|\cdot\Delta+\Theta)\cdot V_{ij} >> 15\cdot \mathrm{sgn}(Z_{ij}) \qquad (15)$$

Summarizing, the present invention enables to control the encoding of film grain information without adversely affecting the overall coding efficiency of the encoding process of video data. For this purpose, a control of the size of the quantization interval for the lowest transform coefficient values is separated from a control of fitting the quantization interval and the quantized value to a probability distribution of the transform coefficient values. This is accomplished by providing a dead-zone parameter to be taken into account by the quantization process and the dequantization process.

## Claims

**1.** A method for encoding video data, comprising the steps of:

dividing an image into blocks, each block including a plurality of pixels,
transforming the pixels of a block into transform coefficients (W), and
quantizing the transform coefficients (W) in accordance with predefined quantization intervals by mapping each coefficient value to a quantized coefficient value

**characterized in that**
the size of the quantization interval of the lowest coefficient values is adjusted in accordance with a variable dead-zone parameter (Θ), and
the applied dead-zone parameter (Θ) is included into the encoded video data for a corresponding modification of the quantization interval of the lowest coefficient values at the decoder side.

**2.** A method according to claim 1, wherein the size of said quantization intervals is adjusted in accordance with a rounding control parameter (f), said rounding control parameter (f) being not part of said encoded video data.

**3.** A method according to claim 1 or 2, wherein said dead-zone parameter (Θ) having a size between a fifth and a half of the interval step size.

**4.** A method according to any of claims 1 to 3, wherein said dead-zone parameter (Θ) having a size of approximately 1/4 of the interval size.

**5.** A method according to any of claims 1 to 4, wherein said dead-zone parameter (Θ) being updated every field or frame of a video sequence.

**6.** A method according to any of claims 1 to 4, wherein said dead-zone parameter (Θ) being updated once per video sequence to be encoded or for every predefined sub-sequences thereof.

**7.** A method according to any of claims 1 to 6, wherein said video data are encoded based on I, P or B type macroblocks and different said dead-zone parameters (Θ) are employed for each macroblock type.

**8.** A method according to any of claims 1 to 7, wherein said method further comprises the steps of:

detecting a degree or the presence of film grain within the video data to be encoded,and
adapting the size of said dead-zone parameter in accordance with the detection result.

**9.** A method according to any of claims 1 to 7, wherein said method further comprises the steps of:

detecting the presence of film grain within the video data to be encoded, and

enabling the application of said dead-zone parameter only if film grain has been detected.

**10.** A method according to any of claims 1 to 9, wherein said method further comprises the step of predicting the block to be encoded based on a previously encoded block wherein said prediction step comprises a decoding step including an inverse quantization step which applies said dead-zone parameter for the de-quantization.

**11.** An encoder for encoding video data based on image blocks, each block including a plurality of pixels, comprising:

a transformer (120) for transforming the pixels of a block into transform coefficients, and

a quantizer (120) for quantizing the coefficients in accordance with predefined quantization intervals by mapping each coefficient value to a quantized coefficient value

**characterized in that**
the size of the quantization interval of the lowest coefficient values being adjustable in accordance with a variable dead-zone parameter (Θ), and
the applied dead-zone parameter (Θ) being included into the encoded video data for a corresponding modification of the quantization interval of the lowest coefficient values at the decoder side.

**12.** An encoder according to claim 11, wherein the size of said quantization intervals being adjustable in accordance with a rounding control parameter (f), said rounding control parameter (f) being not part of said encoded video data.

**13.** An encoder according to claim 11 or 12, wherein said dead-zone parameter (Θ) having a size between a fifth and a half of the interval size.

**14.** An encoder according to any of claims 11 to 13, wherein said dead-zone parameter (Θ) having a size of approximately 1/4 of the interval size.

**15.** An encoder according to any of claims 11 to 14, wherein said dead-zone parameter (Θ) being updated every field or frame of a video sequence.

**16.** An encoder according to any of claims 11 to 14, wherein said dead-zone parameter (Θ) being updated once per video sequence to be encoded or for every predefined sub-sequences thereof.

**17.** An encoder according to any of claims 11 to 16, wherein said video data being encoded based on I, P or B type macroblocks and different said dead-zone parameters (Θ) being employed for each macroblock type.

**18.** An encoder according to any of claims 11 to 17, further comprising:

a detector for detecting a degree or the presence of film grain within the video data to be encoded, and

setting means for adapting the size of said dead-zone parameter in accordance with the detection result.

**19.** An encoder according to any of claims 11 to 17, further comprising:

a detector for detecting the presence of film grain within the video data to be encoded, and

enabling means for enabling the application of said dead-zone parameter only if film grain has been detected.

**20.** An encoder according to any of claims 11 to 19, wherein said encoder being a predictive encoder and further comprises a decoder for decoding the encoded video data, said decoding including a de-quantizer for applying said dead-zone parameter during de-quantization.

**21.** A method for decoding encoded video data on a block basis, said encoded video data include quantized coefficients, comprising the steps of:

de-quantizing a block of quantized coefficients of said encoded video data by mapping each quantized coefficient value to a de-quantized coefficient value in accordance with predefined de-quantization intervals, and transforming a block of de-quantized coefficients into a block of pixels,

**characterized in that**
the size of the de-quantization interval of the lowest coefficient values is adjusted in accordance with a variable dead-zone parameter (Θ).

**22.** A method according to claim 21, wherein said dead-zone parameter (Θ) having a size between a fifth and a half of the interval step size.

**23.** A method according to claim 21 or 22, wherein said dead-zone parameter (Θ) having a size of approximately 1/4 of the interval size.

**24.** A method according to any of claims 21 to 23, wherein said dead-zone parameter (Θ) being updated every field or frame of a video sequence.

**25.** A method according to any of claims 21 to 24, wherein said video data being encoded as I, P or B type macroblocks, each macroblock having a different said dead-zone parameter (Θ).

**26.** A method according to any of claims 21 to 25, wherein said dead-zone parameter (Θ) being part of said encoded video data.

**27.** A decoder for decoding encoded video data on a block basis, said encoded video data include quantized coefficients, comprising:

an inverse quantizer (220) for de-quantizing a block of quantized coefficients of said encoded video data by mapping each quantized coefficient value to a de-quantized coefficient value in accordance with predefined de-quantization intervals, and
an inverse transformer (220) for transforming a block of de-quantized coefficients into a block of pixels,

**characterized in that**
the size of the de-quantization interval of the lowest coefficient values is adjusted in accordance with a variable dead-zone parameter (Θ).

**28.** A decoder according to claim 27, wherein said dead-zone parameter (Θ) having a size between a fifth and a half of the interval step size.

**29.** A decoder according to claim 27 or 28, wherein said dead-zone parameter (Θ) having a size of approximately 1/4 of the interval size.

**30.** A decoder according to any of claims 27 to 29, wherein said dead-zone parameter (Θ) being updated every field or frame of a video sequence.

**31.** A decoder according to any of claims 27 to 30, wherein said video data being encoded as I, P or B type macroblocks, each macroblock having a different said dead-zone parameter (Θ).

**32.** A decoder according to any of claims 27 to 31, wherein said dead-zone parameter (Θ) being part of said encoded video data.

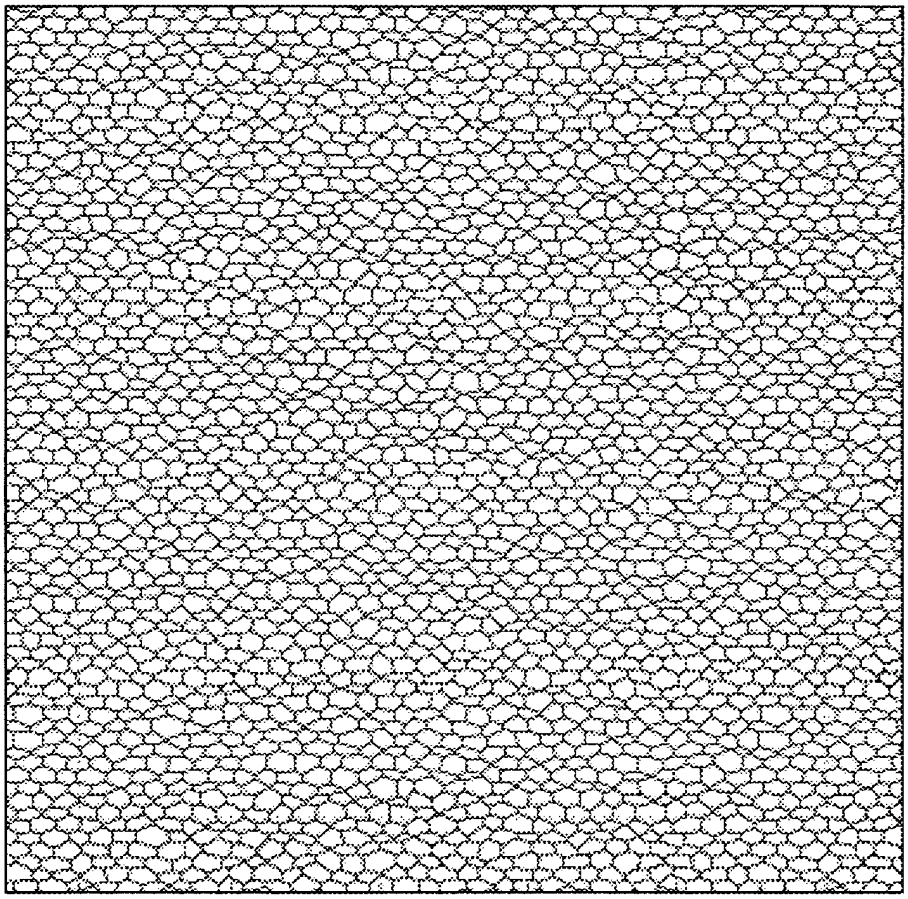

Fig. 1

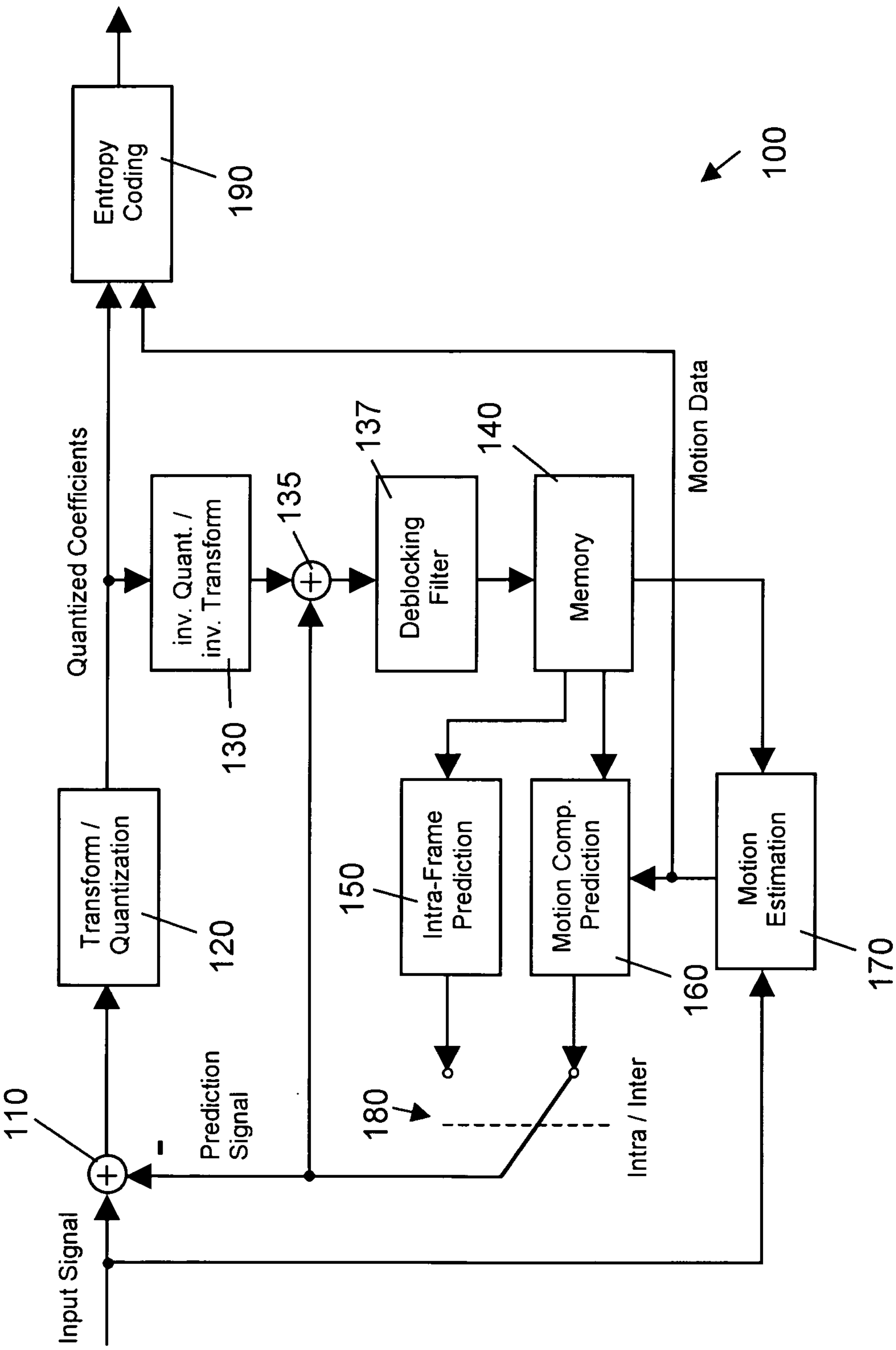
Input Signal
110
-
Prediction Signal
Transform / Quantization
120
Quantized Coefficients
inv. Quant. / inv. Transform
130
135
Deblocking Filter
137
Memory
140
Entropy Coding
190
Motion Data
Intra-Frame Prediction
150
Motion Comp. Prediction
160
Motion Estimation
170
180
Intra / Inter
100

Fig. 2

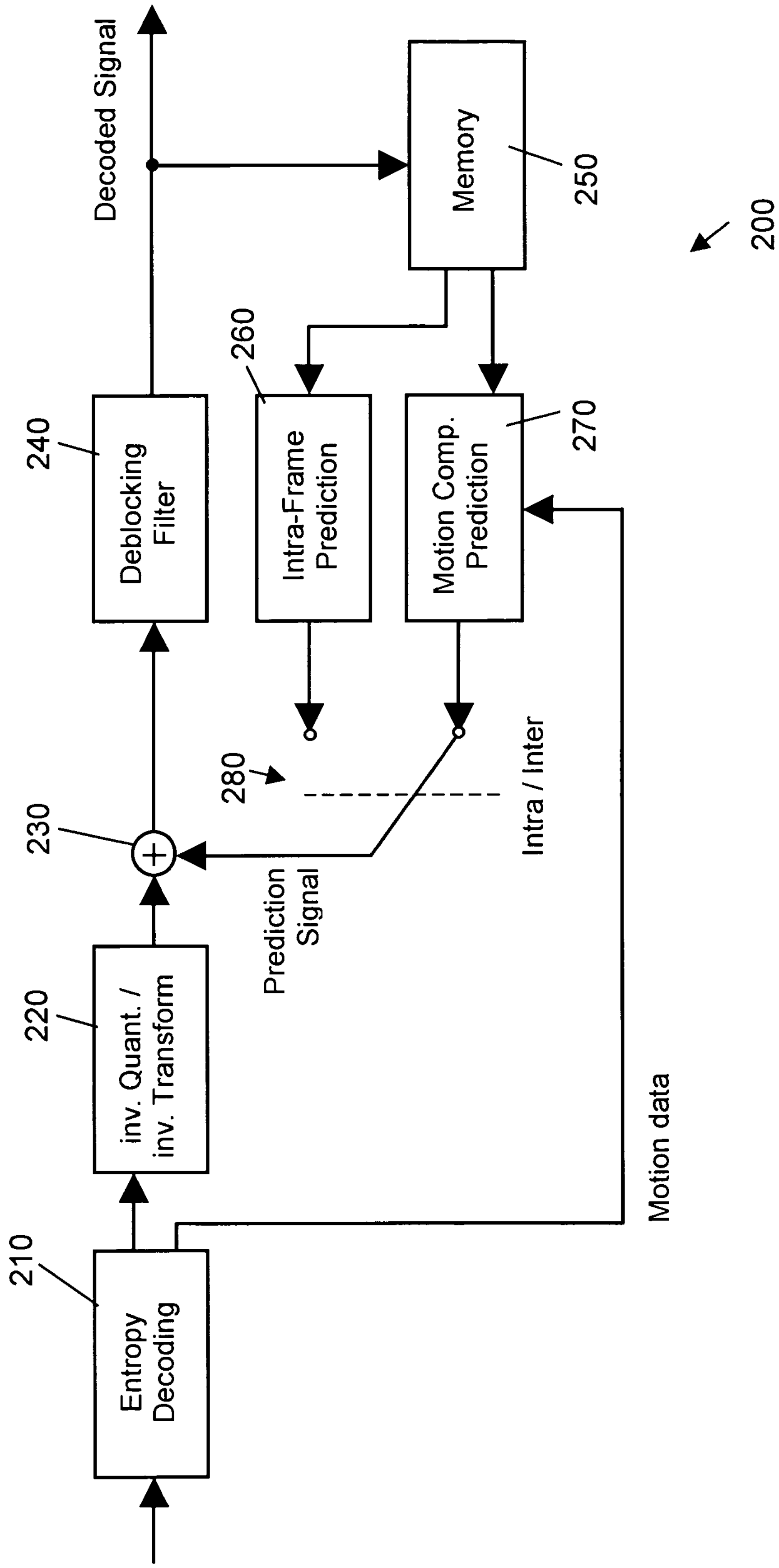
Decoded Signal
Memory
250
200
260
240
Deblocking Filter
Intra-Frame Prediction
Motion Comp. Prediction
270
280
230
Intra / Inter
Prediction Signal
220
inv. Quant. / inv. Transform
Motion data
210
Entropy Decoding

Fig. 3

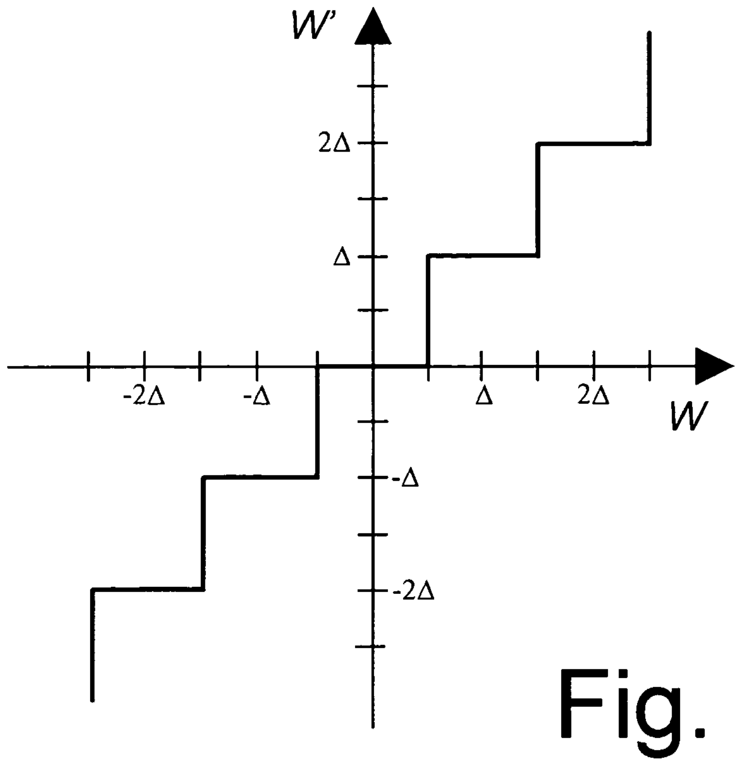


Fig. 4

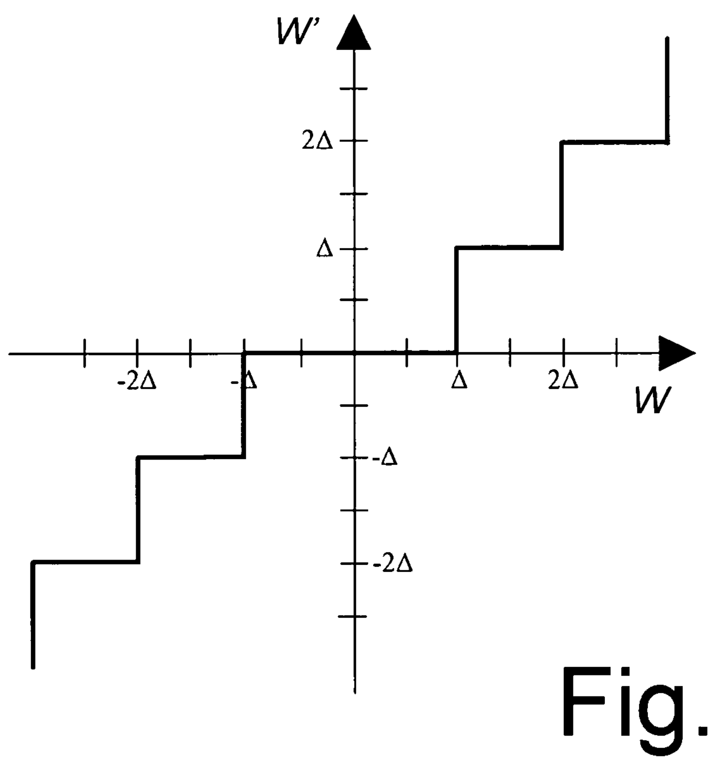


Fig. 5

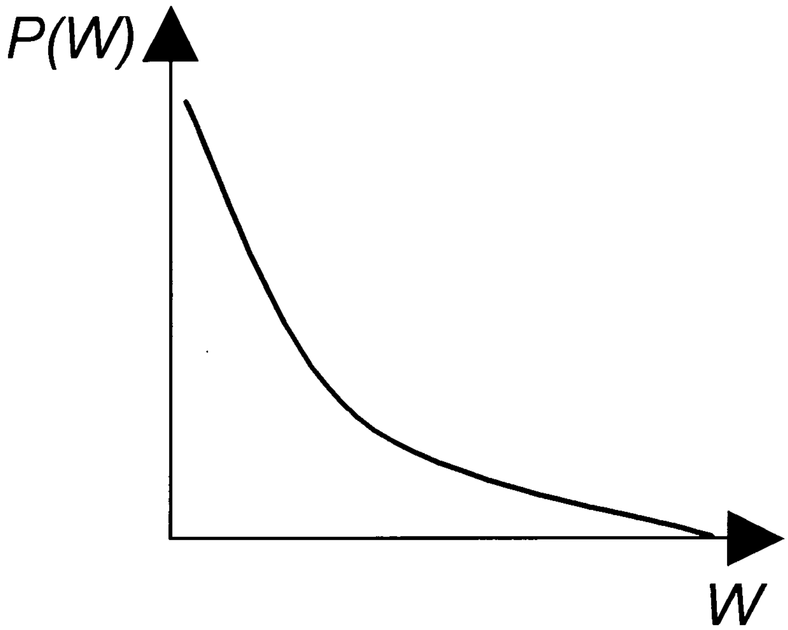


Fig. 6

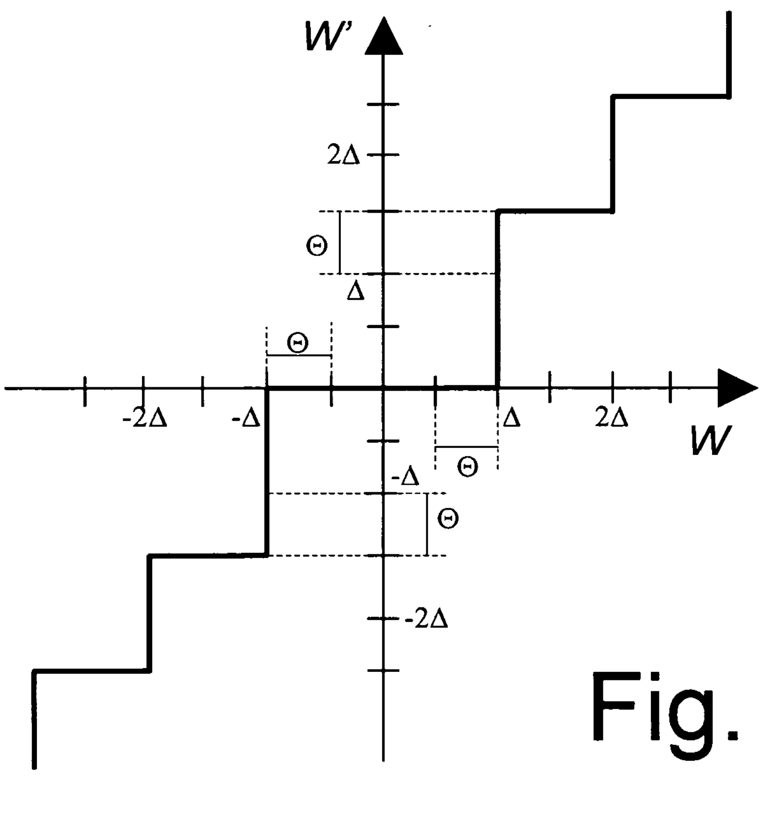


Fig. 7

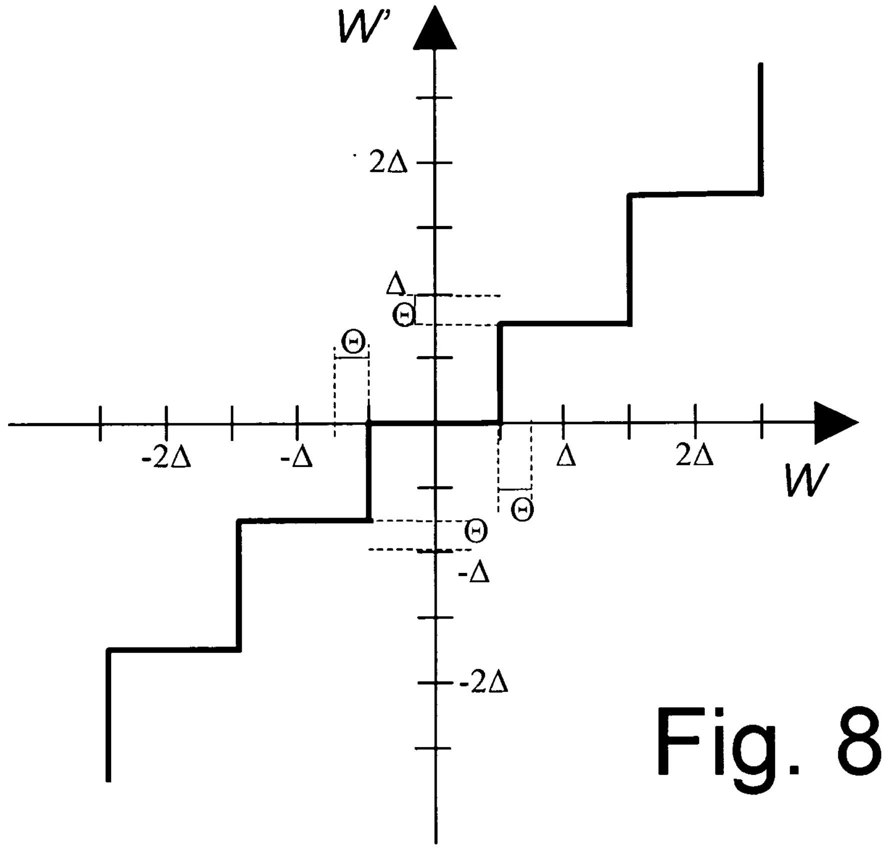


Fig. 8a

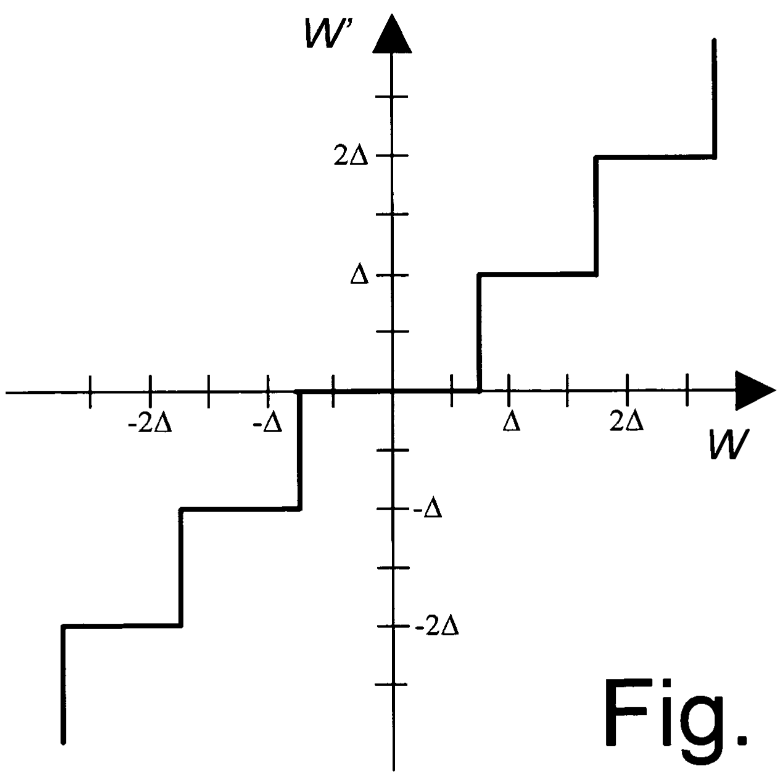


Fig. 8b

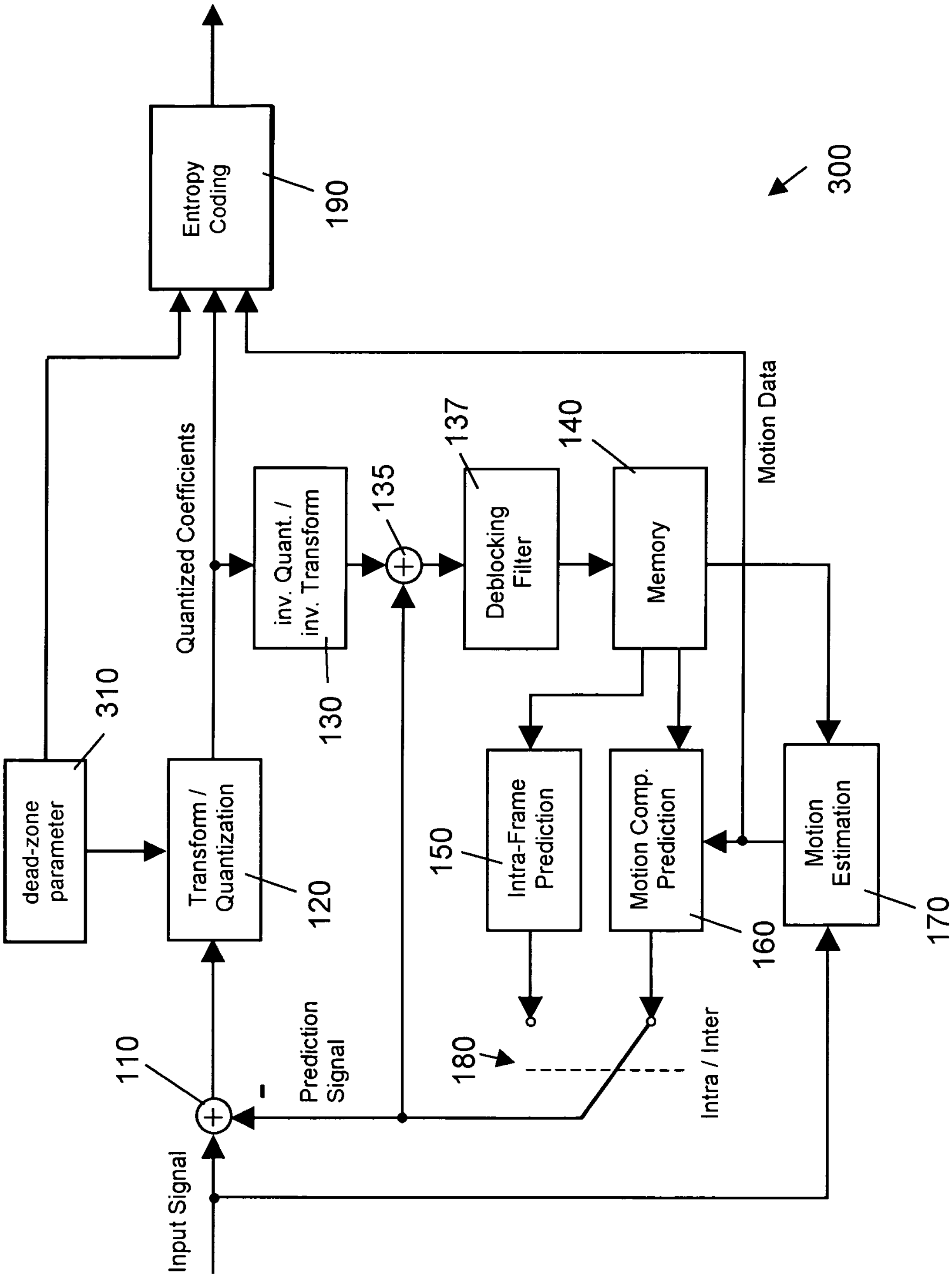
Input Signal
110
Prediction Signal
-
dead-zone parameter
310
Transform / Quantization
120
Quantized Coefficients
inv. Quant. / inv. Transform
130
135
Deblocking Filter
137
Memory
140
Intra-Frame Prediction
150
Motion Comp. Prediction
160
Motion Estimation
170
180
Intra / Inter
Motion Data
Entropy Coding
190
300

Fig. 9

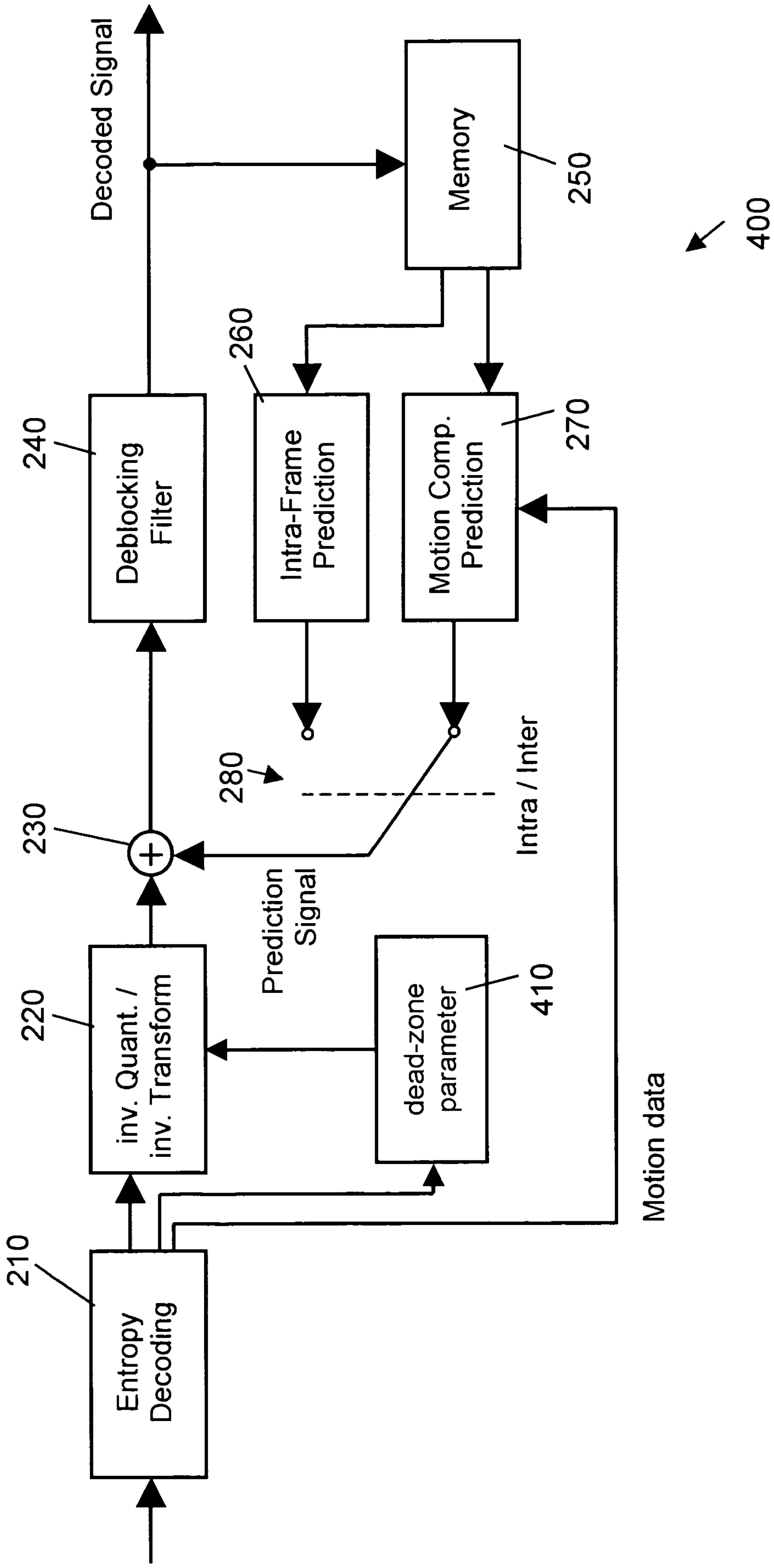
Entropy Decoding
210
inv. Quant. / inv. Transform
220
dead-zone parameter
410
Motion data
230
Prediction Signal
Intra / Inter
280
Deblocking Filter
240
Intra-Frame Prediction
260
Motion Comp. Prediction
270
Decoded Signal
Memory
250
400

Fig. 10

| | | | | | | | |
|---|---|---|---|---|---|---|---|
| 8679 | -238 | 33 | 6 | -468 | 42 | -64 | -6 |
| 70 | 80 | -14 | -39 | -86 | -30 | -14 | -16 |
| 30 | -31 | -10 | -2 | -2 | 8 | 12 | -6 |
| 5 | 0 | 13 | 5 | 12 | -6 | -8 | -4 |
| -308 | -20 | -44 | 7 | 322 | 35 | 25 | -4 |
| -63 | -41 | -5 | 2 | -27 | -12 | 15 | -5 |
| -10 | 13 | 1 | -5 | -7 | -15 | -26 | -2 |
| 1 | 5 | 11 | -2 | 4 | -1 | 5 | 27 |

Fig. 11a

| | | | | | | | |
|---|---|---|---|---|---|---|---|
| 66 | -3 | 0 | 0 | 100 | 0 | -1 | 0 |
| 0 | 2 | 0 | 0 | -1 | -1 | 0 | 0 |
| 0 | 0 | 0 | 0 | 0 | 0 | 0 | 0 |
| 0 | 0 | 0 | 0 | 0 | 0 | 0 | 0 |
| -68 | 0 | 0 | 0 | 82 | 0 | 0 | 0 |
| 0 | -1 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Fig. 11b

| | | | | | | | |
|---|---|---|---|---|---|---|---|
| 8679 | -238 | 33 | 6 | -468 | 42 | -64 | -6 |
| 70 | 80 | -14 | -39 | -86 | -30 | -14 | -16 |
| 30 | -31 | -10 | -2 | -2 | 8 | 12 | -6 |
| 5 | 0 | 13 | 5 | 12 | -6 | -8 | -4 |
| -308 | -20 | -44 | 7 | 322 | 35 | 25 | -4 |
| -63 | -41 | -5 | 2 | -27 | -12 | 15 | -5 |
| -10 | 13 | 1 | -5 | -7 | -15 | -26 | -2 |
| 1 | 5 | 11 | -2 | 4 | -1 | 5 | 27 |

Fig. 11c

| | | | | | | | |
|---|---|---|---|---|---|---|---|
| 66 | -4 | 1 | 0 | -106 | 1 | -1 | 0 |
| 1 | 2 | 0 | -1 | -1 | -1 | 0 | 0 |
| 1 | -1 | 0 | 0 | 0 | 0 | 0 | 0 |
| 0 | 0 | 0 | 0 | 0 | 0 | 0 | 0 |
| -62 | 0 | -1 | 0 | 82 | 1 | 1 | 0 |
| -1 | -1 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Fig. 11d

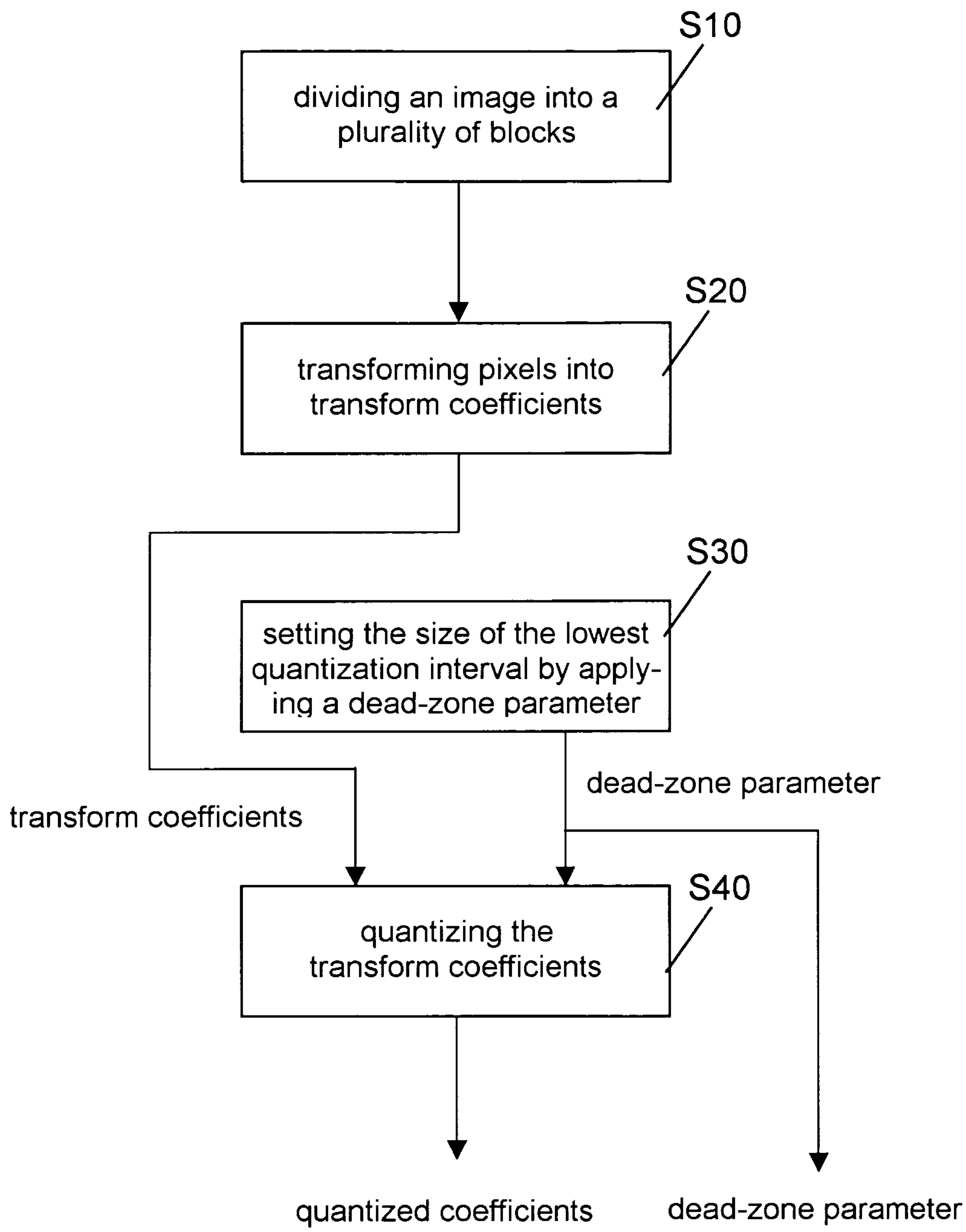
S10
dividing an image into a plurality of blocks
S20
transforming pixels into transform coefficients
S30
setting the size of the lowest quantization interval by applying a dead-zone parameter
dead-zone parameter
transform coefficients
S40
quantizing the transform coefficients
quantized coefficients
dead-zone parameter

Fig. 12

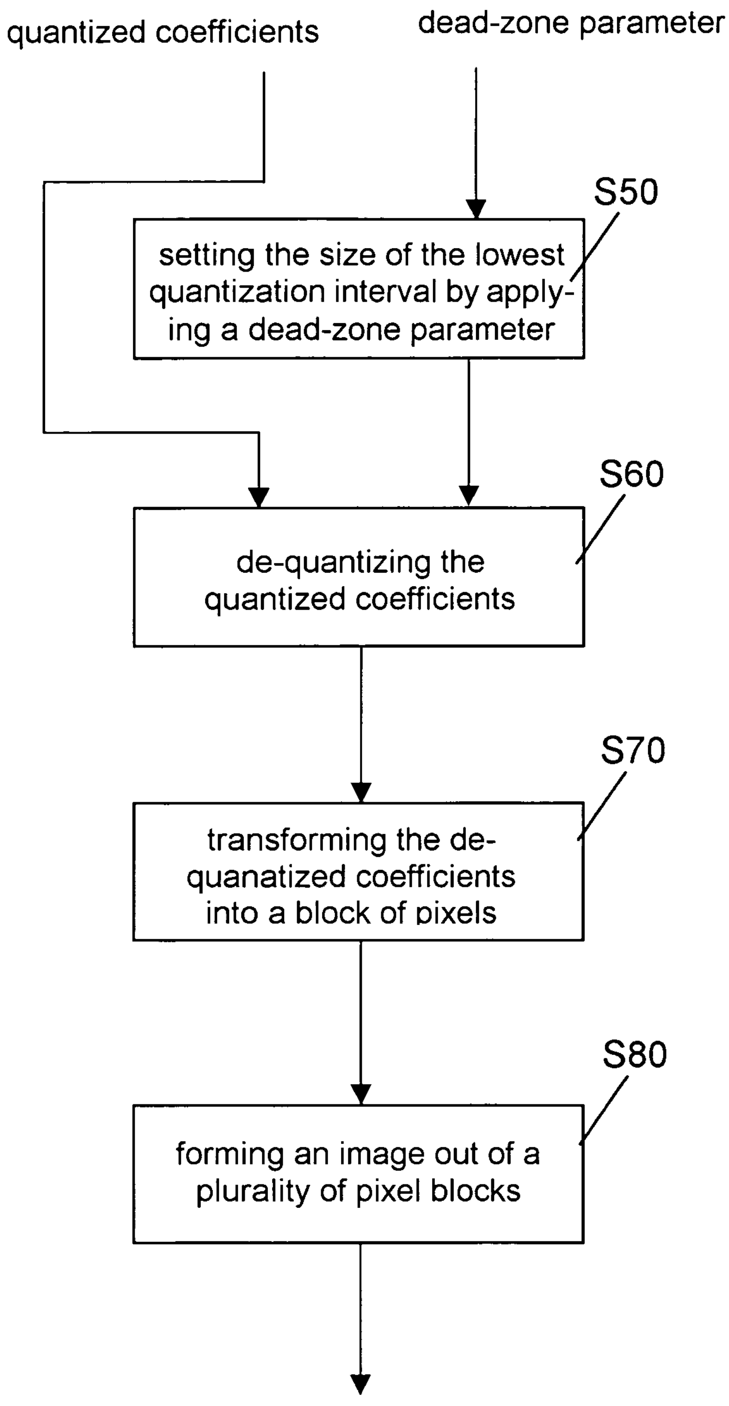
quantized coefficients
dead-zone parameter
S50
setting the size of the lowest quantization interval by apply-ing a dead-zone parameter
S60
de-quantizing the quantized coefficients
S70
transforming the de-quanatized coefficients into a block of pixels
S80
forming an image out of a plurality of pixel blocks

Fig. 13

European Patent Office

# EUROPEAN SEARCH REPORT

Application Number
EP 04 00 3194

| Category | DOCUMENTS CONSIDERED TO BE RELEVANT<br>Citation of document with indication, where appropriate, of relevant passages | Relevant to claim | CLASSIFICATION OF THE APPLICATION (Int.Cl.7) |
|---|---|---|---|
| X | EP 1 379 090 A (MICROSOFT CORP)<br>7 January 2004 (2004-01-07)<br>* page 2, paragraphs 7,9 *<br>* page 6, paragraph 45 - paragraph 51 *<br>* figures 2-6 *<br>----- | 1-32 | H04N7/26<br>H04N7/30 |
| A | M. W. MARCELLIN, M. A. LEPLEY, A. BILGIN, T. J. FLOHR, T. T. CHINEN, J. H. KASNER: "An Overview of Quantization in JPEG-2000"<br>SIGNAL PROCESSING: IMAGE COMMUNICATIONS, SPECIAL ISSUE ON JPEG-2000, [Online]<br>vol. 17, no. 1, December 2001 (2001-12), pages 73-84, XP002287860<br>Retrieved from the Internet:<br>URL:http://www-spacl.ece.arizona.edu/><br>[retrieved on 2004-07-08]<br>* paragraphs [0002], [03.2] *<br>* figures 1-3 *<br>----- | 1-32 | |
| A | RABBANI M ET AL: "An overview of the JPEG 2000 still image compression standard"<br>SIGNAL PROCESSING. IMAGE COMMUNICATION, ELSEVIER SCIENCE PUBLISHERS, AMSTERDAM, NL,<br>vol. 17, no. 1, January 2002 (2002-01), pages 3-48, XP004326797<br>ISSN: 0923-5965<br>* page 15, paragraph 2.3 - page 17 *<br>* page 44, paragraph 6.4.2 *<br>* figure 10 *<br>----- | 1-32 | TECHNICAL FIELDS SEARCHED (Int.Cl.7)<br>H04N |
| A | US 6 408 026 B1 (TAO BO)<br>18 June 2002 (2002-06-18)<br>* column 1, line 16 - column 4, line 30 *<br>* column 9, line 27 - line 67 *<br>* figures 1,2 *<br>-----<br>-/-- | 1-32 | |

The present search report has been drawn up for all claims

| Place of search | Date of completion of the search | Examiner |
|---|---|---|
| Munich | 26 July 2004 | Kuhn, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

European Patent Office

# EUROPEAN SEARCH REPORT

Application Number
EP 04 00 3194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | OKTEM R, EGIAZARIAN K: "A wavelet transform method for coding film-grain noise corrupted images" INERNATIONAL CONFERENCE ON ACOUSTINCS AND SIGNAL PROCESSING (ICASSP 2000), vol. 4, 5 June 2000 (2000-06-05), - 9 June 2000 (2000-06-09) pages 2063-2066, XP010504703 Istanbul, Turkey * page 2064, paragraph 3 * ----- | 8,9,18, 19 | |
| A | PATENT ABSTRACTS OF JAPAN vol. 2003, no. 12, 5 December 2003 (2003-12-05) -& JP 2003 230142 A (SONY CORP), 15 August 2003 (2003-08-15) * abstract * * paragraph [0135] * * figures 9,10 * ----- | 1-32 | |
| A | PATENT ABSTRACTS OF JAPAN vol. 016, no. 224 (E-1206), 25 May 1992 (1992-05-25) -& JP 04 040118 A (MATSUSHITA ELECTRIC IND CO LTD), 10 February 1992 (1992-02-10) * abstract * * figures 2,3 * ----- | 1-32 | TECHNICAL FIELDS SEARCHED (Int.Cl.7) |
| A | AL-SHAYKH O K ET AL: "Lossy compression of images corrupted by film grain noise" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. 1, 16 September 1996 (1996-09-16), pages 805-808, XP010202188 ISBN: 0-7803-3259-8 * abstract * ----- | 8,9,18, 19 | |

The present search report has been drawn up for all claims

| Place of search | Date of completion of the search | Examiner |
|---|---|---|
| Munich | 26 July 2004 | Kuhn, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 04 00 3194

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2004

| Patent document cited in search report | | Publication date | Patent family member(s) | | Publication date |
|---|---|---|---|---|---|
| EP 1379090 | A | 07-01-2004 | EP 1379090 | A2 | 07-01-2004 |
| | | | US 2004008899 | A1 | 15-01-2004 |
| US 6408026 | B1 | 18-06-2002 | AU 7054400 | A | 05-03-2001 |
| | | | WO 0111893 | A1 | 15-02-2001 |
| JP 2003230142 | A | 15-08-2003 | JP 2003289542 | A | 10-10-2003 |
| | | | US 2003147463 | A1 | 07-08-2003 |
| JP 04040118 | A | 10-02-1992 | NONE | | |

EPO FORM P0459

For more details about this annex : see Official Journal of the European Patent Office, No. 12/82